# EUROPEAN PATENT APPLICATION

(11) **EP 1 655 796 A1**
(43) Date of publication of application: **10.05.2006**
(21) Application number: 03817997.4
(22) Date of filing: 11.08.2003
(51) Int. Cl.: H01M 8/02, H01M 8/10

(54) **SEPARATOR FOR FUEL CELL AND MOLDING MATERIAL THEREFOR**

(71) Applicant: NIPPON PILLAR PACKING CO., LTD., Osaka-shi, Osaka 532-0022 (JP)
(72) Inventor: YOSHIDA, T., c/o Nippon Pillar Packing Co., Ltd., Sanda-shi, Hyogo 669-1333 (JP)
(74) Representative: Schickedanz, Willi
(86) International application number: PCT/JP2003/010239
(87) International publication number: WO 2005/015670

(57) **Abstract**

The present invention discloses the forming material which can get the separator for fuel cell which can show a superior characteristic electrically. This forming material consists of the aggregation of granular composite which is formed by coating graphite powder with the coating layer consisting of the phenol resin and carbon nano-fiber, and the composition ratio is set to the graphite powder of 55~91 mass percent, phenol resin of 9~25 mass percent and carbon nano-fiber of 3~30 mass percent.

## Description

### BACKGROUND OF THE INVENTION

### Field of the Invention

The present invention relates to the separator for the solid polymer type fuel cell, as well as to the forming material to mold the separator.

### Prior Art

Typically, a solid polymer type fuel cell is constructed by stacking hundreds of single cells, each of which is comprised of a solid polymer membrane sandwiched between the anode and the cathode accompanied by the separators. Furthermore, a fuel gas, such as hydrogen, is supplied on the anode side through the gas supply grooves formed on the separator, and an oxidation gas, such as oxygen, is supplied on the cathode side, so that electrochemical reaction is caused. In the electrochemical reaction, the chemical energy of fuel is converted to the electric energy to be output.

The material of the separator used for said fuel cells is required to have proper properties in diverse aspects as follows: Firstly, the separator is required to have the least possible intrinsic as well as contact resistance, not only because it acts as the conduit through which the electric current generated in the individual single cells flows. but also because the separators of neighboring cells are adhered together to form, as a whole, a series connected power unit.

In addition, the separator material must have high gas impermeability in order to ensure completely separated supply of the fuel gas and the oxidation gas. Furthermore, since the fuel cells are assembled by stacking as numerous as hundreds of single cells, as described above, it is demanded to have as thin wall thickness of separator as possible, while the separators need to have enough mechanical strength to sustain the pressure to keep the stack in one piece as well as to achieve a preferable forming accuracy in production.

As the materials of the separators that are required to have such properties, for example, metal plates such as pure copper and stainless steel are known. However, since these metallic materials are susceptible to hydrogen embrittlement due to contact with hydrogen gas, they have a problem of lacking long time stability.

Recently, separators made of graphite nuclear mixed with such thermosetting resin as phenol resin, etc. as binder, compacted under pressure have been developed. Graphite materials have a small electric resistance, and since the graphite materials are superior in corrosion resistance, the problems as described above in case using said metal plate have been solved. In addition, since pore voids occurring inside the pressed powder compact are filled with the binder, it is possible to obtain gas impermeability to some extent.

Conventionally, said graphite-based separators are produced through a series of processes, for example, beginning with mixing phenol resin or other thermosetting resin as the binder and volatile organic solvent like alcohol into slurry in which the graphite powder is added; then drying this mixture after kneading it; followed by pulverizing the dried cake into granules of preset grain sizes; and then forming the separator using said granules as raw material (press forming). In the above mentioned pulverizing process, the graphite powder, of which surfaces have been covered by non-conducting resin in he kneading process, is crashed in such manner that the graphite surfaces are exposed, so that the separator formed in the subsequent pressing process in a cavity may have required conductivity.

In this case, with increase in resin quantity, the mechanical strength and gas impermeability improve. Therefore, in the conventional case, at first the resin content required to satisfy the mechanical strength and gas impermeability requirements which the separator for fuel cell needs is determined, and the separators made of graphite are produced.

However, in the conventional separator made of graphite formed by producing method as described above, the electrical characteristics such as contact resistance etc. are not always enough to satisfy requirements. In other words, this electrical characteristic improve with decreasing the resin quantity, but the mechanical strength and gas impermeability are reduced with decreasing the resin quantity. Therefore, since the resin quantity, conventionally, cannot be reduced much, the fine electrical characteristics are not provided together.

### SUMMARY OF THE INVENTION

The objects of the present invention are to provide a forming material for separator for fuel cell which shows the excellent mechanical and electrical characteristics without causing such problems as described above, as well as to provide a separator for fuel cell incorporating such forming material.

To be more specific, the forming material of separator for fuel cells in the present invention is aggregation of granular composites, and each granular composite is composed of graphite nuclear coated by coating layers consisting of a hardening resin and carbon nano-substance. In a preferable embodiment, the composition ratio of present forming material is the graphite powder of 55~91 mass percent, hardening resin of 9~25 mass percent and carbon nano-substance 3~30 mass percent (more preferably 10~20 mass percent). In addition, for example, the coating layer can be formed in a two-layers structure which is composed of the carbon nano-substance layer coating the graphite nuclear and the hardening resin layer further coating this layer or a mixture layer which is composed by dispersing the carbon nano-substance in the hardening resin.

For graphite powder, it is possible to use any kind of graphite such as natural graphite, artificial graphite, carbon black, kish graphite and swelling graphite etc., and the graphite can be selected in consideration of condition such as cost etc. but it is preferable to use the graphite with the average grain size of 50~150 *µ*m containing fixed carbon more than 98 percent. In general, it is preferable to use the natural graphite and artificial graphite according to the electrical characteristic. Additionally, in case that the compound ratio of graphite nuclear in forming material is less than 55 mass percent and the average grain size of graphite powder is less than 50µm, it is difficult to ensure the electrical characteristic of separator enough, and in other cases that the compound ratio of graphite powder in forming material is higher than 91 mass percent and the average grain size of graphite nuclear is larger than 150µm, it is difficult to ensure the separator strength enough.

For hardening resin, the phenol resin of resol or novolak system is optimum as they have high wettability with graphite. It is also possible to use other resin than phenol resin such as epoxy resin (bisphenol A type epoxy resin, bromination bisphenol A type epoxy resin, phenol Novolak type epoxy resin, creosol novolak mode epoxy resin, alicycle mode epoxy resin, aliphatic epoxy resin), unsaturated polyester resin (ortho phthalic acid system, isophthalic acid system, terephthalic acid system, adipic acid system, HET acid system (HET acid; Hexachloro-3, 6- endo methylene - tetrahydro phthalic anhydride), 3, 6- endo methylene - tetrahydro phthalic anhydride system, maleic acid system, fumaric acid system, itaconic acid system), vinyl ester resin (Novolak type vinyl ester resin, bisphenol type vinyl ester resin), an allylic ester resin (things produced by terephthalic acid, isophthalic acid, trimerit acid, ester of polyvalence carboxylic acid of pyro merit acid, ethylene glycol, propylene glycol, 1, 4-butanediol, polyhydric alcohol of neopentyl glycolic and allyl alcohol), alkyd resin, acryl resin, melamine resin, xylene resin, guanamine resin, diallyl phthalate resin, furan resin, imide resin, urethane resin, urea resin and so on. Additionally, in a case that the compound ratio of hardening resin in forming material is less than 9 mass percent, it is difficult to ensure the separator strength and compatibility (resin fluidity) enough, and in a case that the ratio is higher than 25 mass percent, it is difficult to expect improvement in electrical characteristic.

For carbon nano-substance, the carbon nano-fiber or the fullerene (C60, C70, C76, C78) etc. can be used. In general, it is preferable to use carbon nano-fiber. The carbon nano-fiber is called the carbon nanotube, graphite whisker, filamentous carbon, graphite fiber, superfine carbon tube, carbon tube, carbon fibril and carbon microtube etc., and there are a fiber (tube) formed by the graphite layer of a single layer (SWNT) and another fiber (tube) formed by the graphite layer of multilayer (MWNT). As carbon nano-fiber used in the present invention, it is possible to use either the mono-layer or multi-layer, and a nanotube form are not limited either (for example, a carbon nano-hom can be used), but it is preferable to use the substance with superior electrical characteristic and compatibility with the matrix. For example, the substance formed by stacking the tubes like a cone of which a head is truncated (Cull Veil (registered trademark)), the substance with barrel-shaped form or the substance of which the fiber diameter is 50~200nm VGNF, VGCF (registered trademark)) is used. Furthermore, in case that the compound ratio of the carbon nano-substance such as carbon nano-fiber etc. in the forming material is less than 3 mass percent, much improvement effects of the carbon nano-substance on electrical characteristics and mechanical strength cannot be expected. On the other hand, a compound ratio of carbon nano-substance in excess of 30 mass percent may prevent the nano-substances in the coating layer from emigrating into, and filling the clearance in, the core graphite nuclear, hence may result in inadequate mechanical strength and gas impermeability. In particular, in an attempt to achieve substantive improvement in electrical properties and mechanical strength with adequate forming accuracy by the use of a carbon nano-substance, it is preferable to maintain the content of carbon nano-substance within a range of 10~20 mass percent.

In addition, the separator for fuel cell in the present invention is formed by pressing the forming material, by the use of the predetermined forming block. It is preferable that the pressing is performed under the condition of heating temperature at 150~200°C and the compacting pressure of 15~20MPa.

### BRIEF DESCRIPTION OF THE DRAWINGS

FIG. 1 is a front view which shows separator for fuel cell of the present invention.
FIG. 2 is a vertical section side-view which shows an example of the fuel cell that the present separator is used.
FIG. 3 is a vertical section side-view which shows an example of the granular composite form composing the forming material of the present separator.
FIG 4 is a vertical section side-view which shows the variant example of the granular composite form composing the forming material of the present separator.
FIG. 5 is a vertical section side-view which shows the state before pressing of the present forming material.
FUG 6 is a vertical section side-view which shows the state after pressing of the forming material.

### THE BEST MODE FOR IMPLEMENTING THE INVENTION

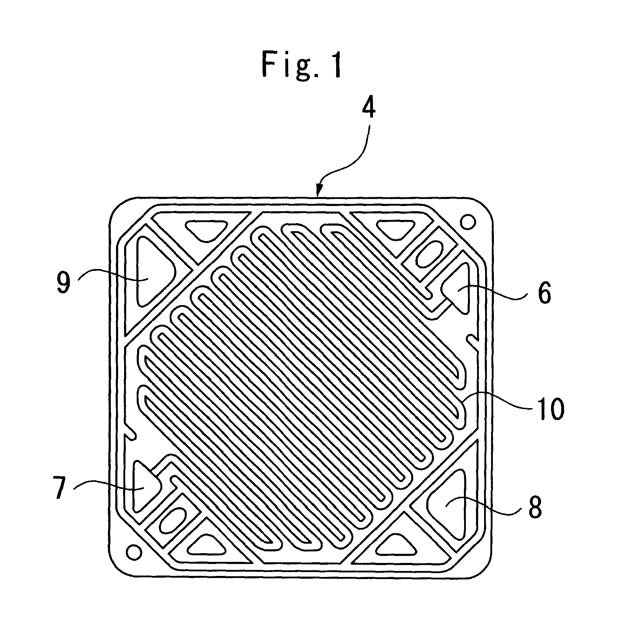

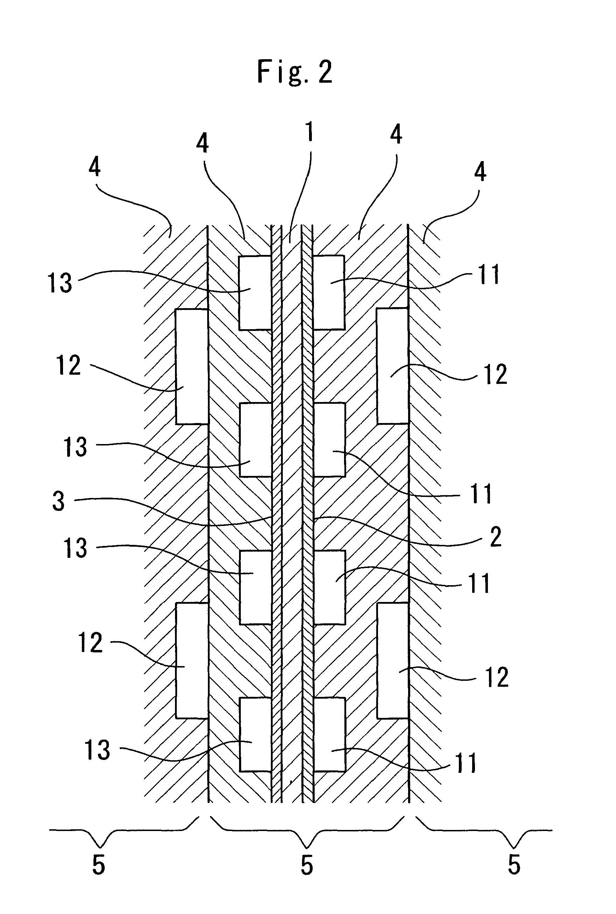

FIG. 1 shows the separator 4 for fuel cell incorporating the present invention, and FIG. 2 shows an example of the fuel cell for which the invented separator is used. In the fuel cell as shown in FIG. 2, for example, the solid polymer membrane 1 for ion exchange consisting of a fluorinated resin is sandwiched between the anode 2 and the cathode 3, which are further sandwiched by the separators 4, constituting a single cell 5. Hundreds of the single cells 5 are stacked together to form a unit of fuel cell with power collection plates (not shown) provided on both sides of the stack. The anode 2 and the cathode 3 are composed of a carbon cloth, a carbon paper or a carbon felt, and each carbon substance is obtained by weaving carbon fiber strings.

Each separator 4, as shown in FIG. 1, has a rectangular sheet shape, and on the outer circumferential side of the separator, the fuel gas holes 6, 7 to flow the fuel gas containing hydrogen and the oxidation gas holes 8, 9 to flow the oxidation gas containing oxygen are formed. When the single cells 5 are stacked, these holes 6~ 9 penetrate through the fuel cell inside longitudinally, and the holes compose a manifold supplying the fuel gas, manifold supplying the oxidation gas and manifold exhausting the oxidation gas.

On the inside surface of each hole 6~9 described above, a duct composed of groove 10 with arbitrary patterns is formed. The patterns of this groove 12 may be a shape as shown in FIG. 1 or otherwise; for example, lattice shape formed between numerous protrusions. Because of this groove 10, as shown in FIG. 2, for the separator 4 on the side adjacent the anode 2, a duct 11 is formed between the separator and a surface of the anode 2, awhile a cooling water duct 12 is formed between the separator and the neighboring separator. On the other hand, in the separator 4 adjacent the side of the cathode 3, an oxidation gas duct 13 is formed between the surface of the cathode 3 and the separator 4.

In the fuel cell of the configuration described above, the fuel gas containing hydrogen supplied from a fuel gas feeder is supplied though said fuel gas manifold for the fuel gas duct 11 of the single cell 5, and on the side of the anode 2 in each single cell, an electrochemical reaction described as H₂→ 2H⁺+2e⁻ is caused. The fuel gas after the reaction is exhausted through the manifold exhausting the fuel gas from the fuel gas duct 11 of each single cell 5 to outside.

At the same time, the oxidation gas (air) containing oxygen supplied from the oxidation gas feeder is supplied through said manifold supplying the oxidation gas for the oxidation gas duct, on the side of the cathode in each single cell, a electrochemical reaction described as O₂+4H⁺+e⁻→ 2H₂O is caused. The oxidation gas after the reaction is exhausted through the manifold exhausting the oxidation gas from the oxidation gas duct 11 of each single cell 5 to outside.

Along with the continuous electrochemical reaction described above, which are, as a whole, expressed in the electrochemical reaction of 2H₂+O₂ → 2H₂O, the chemical energy contained in the fuel is converted into the electrical energy, giving rise to the desired battery performance. In addition, this fuel cell is operated in the temperature range of about 80~100 °C. In operation, the cooling water is supplied from the cooling water feeder set at outside, and since this cooling water is circulated through said cooling water duct 12, the temperature of the fuel cell is kept in said temperature range.

The separator 4 is usually formed in the plate shape of 1~3 mm in thickness, and the grooves 10 of about 0.3~1.5 mm in depth are provided on the both sides of the separator 4 adjacent the anode 2 and on one side of the separator 4 adjacent the cathode 3. Said fuel gas duct 11, said cooling water duct 12 and said oxidation gas duct are formed of the grooves.

Besides, the separator 4 is formed by using the forming material 20 which is an aggregation of the granular composite 25, which consists of graphite nuclear 21 and outer coating layer 24 made of hardening resin 22 and nano-substance 23, and which is formed by pressing (compression molding) using the predetermined forming block. As described above, for the compound ratio of each component in the forming material 20, it is preferable to contain the graphite powder of 55~91 mass percent, hardening resin of 9~25 mass percent and carbon nano-substance of 3~30 mass percent (more preferably 10~20 mass percent). As graphite nuclear 21, it is preferable to use a natural or artificial graphite which has the average grain size of 50~150 µm and fixed carbon content higher than 98%. As hardening resin, it is optimum to use the phenol resin which is superior in wettability with graphite powder. As carbon nano-substance 23, the carbon nano-fiber or fullerene is used, but in this example, the carbon nano-fiber is used. As carbon nano-fiber, either SWNT or MWNT is used, but a material which is superior in electrical characteristic and in compatibility with resin matrix is used.

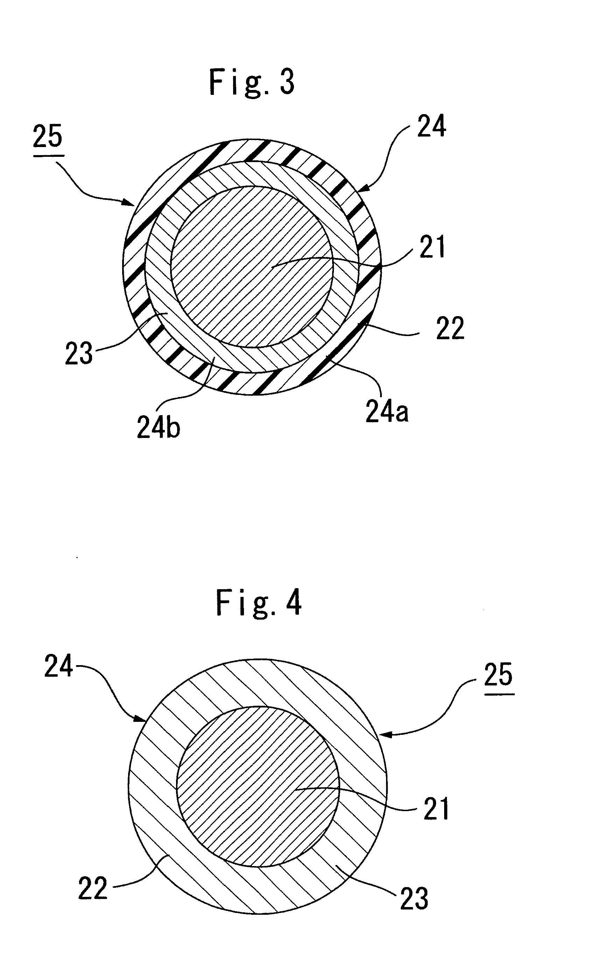

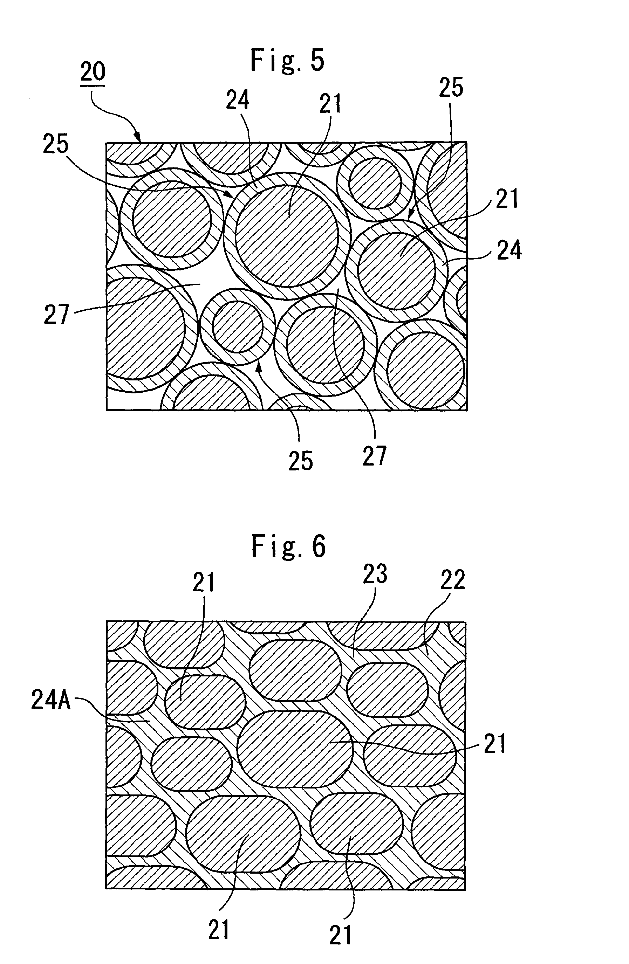

The granular composite 25 is formed by coating the graphite nuclear 21 with the coating layer 24 which consists of the hardening resin (phenol resin, etc.) 22 and the carbon nano-fiber 23. For example, the coating layer 24 is formed into a form shown in FIG. 3 or FIG. 4. That is to say, in the granular composite 25 shown in FIG. 3 (called "the first granular composite"), the coating layer 24 is formed into a double layer structure which consists of the layer (called "carbon nano-substance layer") 24b of carbon nano-fiber 23 coating the graphite pander 21 and another layer (called "resin layer") 24a of the hardening resin 22 coating the object that the graphite nuclear 21 is coated with the carbon nano-substance layer 24b (called "graphite nuclear coated with carbon nano-substance"). Thus, this first granular composite 25 is constructed by firstly having the carbon nano-fiber 23 adhere to, or bonded to, the graphite nuclear 21 and subsequently coating such blank with resin 22. Additionally, in the granular composite shown in FIG. 4 (called "the second granular composite"), the coating layer 24 is formed into a mixture layer wherein the carbon nano-fiber is dispersed in the hardening resin 22 uniformly. For example, the second granular composite is produced by having mixture of carbon nano-fiber 23 and fine powder of hardening resin (finer than graphite nuclear 21) 22 adhere to, or bonded to, the surface of graphite nuclear 21

Specifically, in case that the resin 24a of the first granular composite 25 is formed, it is desirable to generate a polymerization reaction of resin on the surface of graphite nuclear coated with carbon nano-substance when a material solution of resin is agitated. For example, in a case that the phenol resin is used as the hardening resin 22, the graphite nuclear coated with carbon nano-substance or the graphite nuclear is immersed in the inside of reaction vessel containing main materials of phenol resin, that is, phenols, formaldehydes and these catalyst or a general catalyst, and while these material are heated and agitated, the phenol resin 22 can adhere to the surface of the graphite nuclear coated with carbon nano-substance or the graphite nuclear 21. The phenol resin (resin layer 24a) in this case, for example, is obtained by the reaction as shown in reaction example 1 or reaction example 2.

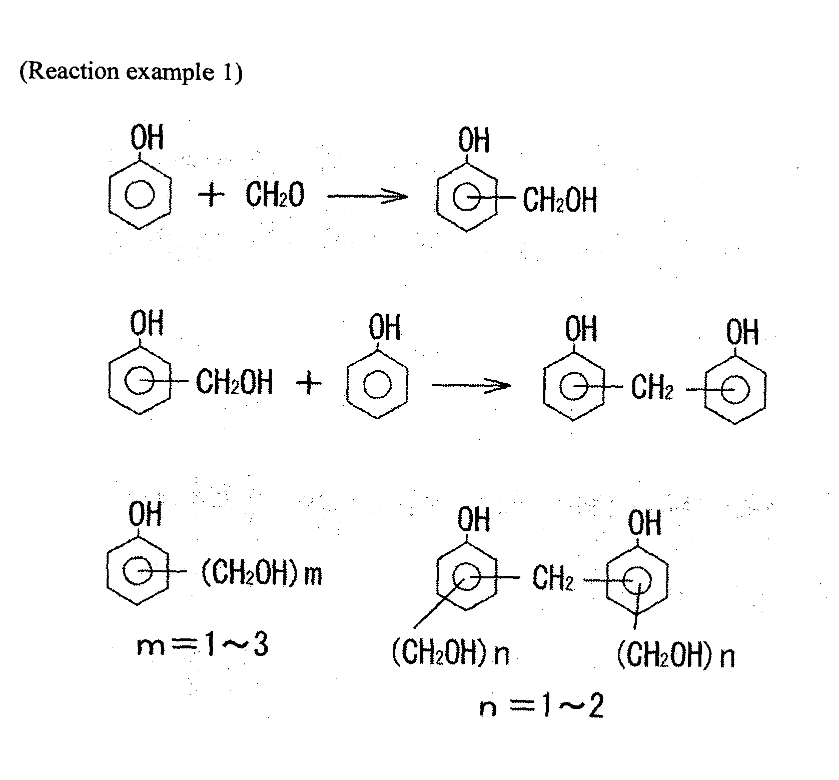

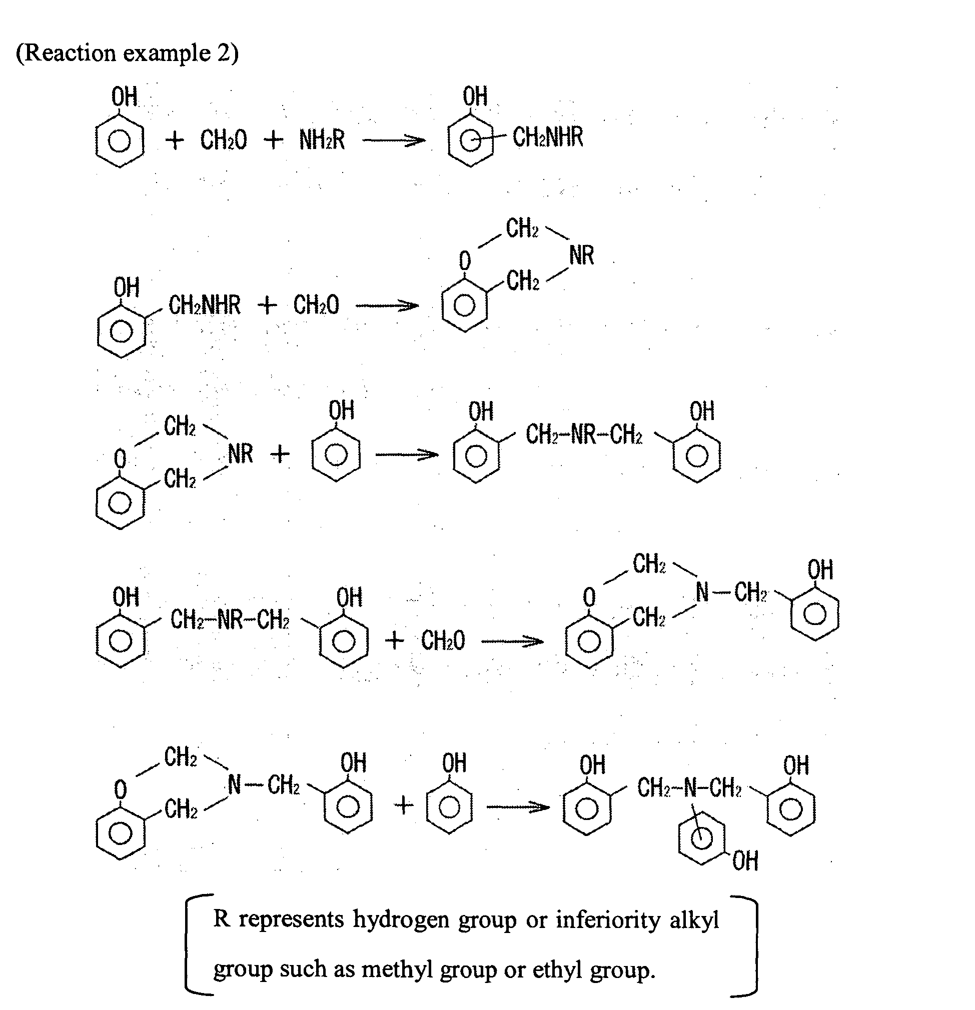

The phenols as described above means the phenol and the phenol derivatives, for example, as materials other than phenol, a three functionality material such as m-creosol, resorcinol and 3,5- xylenol etc., a material with four functionality such as bisphenol A and dihydroxy diphenyl-methane etc., a o- or p-substitution phenols with two functionality such as o-cresol, p-cresol, p-tert butyl phenol, p-nonylphenol, p-cumyl phenol, p-nonyl phenol, 2, 4 or 2, 6-xylenol etc and so on.

Furthermore, it is possible to use halogenated phenol substituted by chlorine or bromine and so on, and one selected from these materials or mixture of more than one material.

In addition, as aldehydes which are main materials of the phenol resin as phenols, it is optimum to use formalin which is an aqueous solution of formaldehyde, but trioxane, tetraoxane and paraformaldehyde etc. can be also used, and as other materials, a part or all of formaldehyde can be also replaced by furfural and furfuryl alcohol.

In addition, as catalyst causing a condensation reaction adding the phenols to the aldehydes, there is a basic catalyst used in synthesis of resol type phenol resin. However, it is not desirable to use such a catalyst, for example, nitrogen-containing compounds such as ammonia, primary amine and secondary amine, that the generated phenol-resin is ammonia resol type phenol resin. When the phenol resin is synthesized by using the nitrogen-containing compounds such as the ammonia, primary amine and secondary amine as a catalyst, there is possibility that nitrogen-containing impurities remain in the phenol resin. Although these catalyst can serve dual roles of providing basicity atmosphere required for synthesis of resol type phenol resin and supplying a reaction element for nitrogen component, the catalyst causes a side reaction accompanying catalyst in the resin reaction. Thus, the nitrogen-containing impurities are generated, and the no little impurities remain in the phenol resin. And as a result of the nitrogen system impurity remaining within phenol resin, content of nitrogen component will cause the following detrimental influence for the fuel cell in which the separator formed of the forming material is mounted; In operation of the fuel cell, it is necessary to pass cooling water which never freezes and which has low electrical conductivity between cell stacks, but in this case, the nitrogen-containing impurities contained in the separator flow out or is eluted while being ionized in the cooling water. As the result, the electrical conductivity of cooling water increases, and it becomes liable to cause electric leakage between the separators and decrease of an electromotive force, that is, there is possibility that stability of the fuel cell decreases. It is desirable that the electric conductivity after cooling is kept low conductivity less than 200 µS/cm, but there is likelihood to deviate from the allowance by elution of the nitrogen-containing impurity. Therefore, the ideal content of nitrogen component is 0 mass percent, but it is desirable to prevent the efflux and dissociation of the nitrogen component by controlling the content of nitrogen component in the forming material as less than 0.3 mass percent. As thus described, in order to reduce the content of nitrogen component in the forming material, it is desirable to select the following catalyzers for addition condensation reaction of the phenols and the aldehydes; oxidae, hydroxide and carbonate of the alkali metal such as sodium, potassium and lithium etc.; and oxide, hydroxide, carbonate and tertiary amine of alkaline-earth metals such as calcium, magnesium and barium etc. It is possible to use a kind of material selected from these materials or two kinds of materials at the same time. As specific examples, sodium hydroxide, potassium hydroxide, lithium hydroxide, sodium carbonate, calcium hydroxide, magnesium hydroxide, barium hydroxide, calcium carbonate, magnesium oxide, calcium oxide, trimethylamine, triethylamine, triethanolamine and 1,8-diazabicyclo [5, 4, 0] undec-7-ene, etc., can be listed. The oxide, hydroxide and carbonate of the alkali metal or the alkaline-earth metals do not contain the nitrogen component, and the tertiary amine contains the nitrogen component but this nitrogen component is not added to the methylol group. Accordingly, the nitrogen component is not taken in the molecule of phenol resin, so that the phenol resin can be prepared desirably. Additionally, in order to prevent the nitrogen component from mixing in the forming material, it is desirable to use the graphite nuclear of which the fixed carbon is more than 98%.

The granular composite 25 is obtained by means as shown above, while the separator 4 which has the electrical characteristics, mechanical strength and gas impermeability can be obtained by using the forming material 20 of the present invention which is aggregations of granular composite 25 without the problem as described in the beginning.

In other words, the forming material 20 (the granular composite 25 of necessary and sufficient amount to form the separator 4) is filled in the predetermined forming block of separator (the forming block have a forming surface corresponding to a shape of separator 4), and is pressed by hot working (in general, heating temperature : 150~200°C , molding pressure : 15~50 MPa, molding time (compression time): several minutes). In addition, if the molding pressure is less than 15 MPa, the obtained compact density becomes too small, and its volume resistance becomes too large, so that it is difficult to obtain the separator which is superior in electroconductivity. In case that excessive pressure more than 50 MPa is applied, the resin 22 or carbon nano-fiber 23 composing coating layer 24 is pushed out of space among graphite nuclear 21 by the pressure, and unevenly distributed around the compact. If such a phenomenon becomes remarkable, there will be possibility that the contact resistance become large. Furthermore, the molding temperature is set suitable for thermal characteristic of resin 22, however, to obtain preferable compactibility such as fluidity etc. of the graphite nuclear 21 inside forming block with smaller volume of resin, it is usually preferable to set the molding temperature higher than 150 °C as described above. However, when the molding temperature exceeds 200°C, a swelling of compact may occur, and when the molding temperature becomes higher, the resin 22 may be carbonized.

Since the forming material 20, or granular composite 25, is made of graphite nuclear 21 and coating layers 24 of resin 22 and carbon nano-fiber 23 entirely covering the graphite nuclear 21, the heated press forming process will not only soften and reshape the resin 22 to the shape of the forming block, but also allow the graphite nucear 21 to be fluid enough to copy the shape of the resin 22. Thus, after the resin 22 is cooled and hardened, the formed blank with shape and dimensions consistent with the forming block, i.e. good dimensional accuracy, can be obtained. In the state that the forming material 20 is filled in the forming block, as shown in Fig. 5, there is a clearance 27 between components of the granular composites contacting each other. While the compressive force acts on granular composite 25 by pressing, the resin 22 composing the coating layer 24 flows into, and fill up, the clearance 27. In other words, since the compressive force acting on the granular composite 25 (welding force) is higher at the parts that the granular composites contact each other, and is lower at non-contact parts facing the clearance 27, resin parts in said contact parts flow into the clearance 27, and, as shown in Fig. 6, a admixture 24A composing the coating layer is filled with space among the graphite nuclear. Namely, fine morphology in which the graphite nuclear 21 is uniformly dispersed in a matrix of mixture 24A (morphology superior in the gas impermeability) is formed. Incidentally, although grains of the graphite nuclear 21 may partially adhere to each other in said contact part under the compressive force due to pressing, the outer circumferential surfaces of the graphite grains are almost entirely enveloped by the admixture 24A leaving the grains of graphite nuclear in not direct contact each other but interceded by the admixture 24A. However, since the admixture 24A is obtained by dispersing the carbon nano-fiber with extremely high electroconductivity into the resin 22, whole electroconductivity is remarkably improved, in comparison with filling only the resin among the graphite nuclear 21, and separators superior in the electrical characteristic are obtained. In addition, generally, on the separator surface that the graphite powder 21 is not exposed, the resin becomes rich, and then the contact resistance across the separator and electrode placed adjacently have tendency to be higher. However, in the present invention, since said separator surface is coated by the admixture 24A including the carbon nano-fiber, in comparison with the separator surface coated by the only resin with non-conductivity, the conductivity becomes extremely higher, and the contact resistance decreases greatly. Furthermore, because the carbon nano-fiber 23 is superior not only in conductivity but also in mechanical strength, even in case the resin layer to envelop the graphite nuclear is rather thin, the strength of the separator as a whole is reinforced effectively by the nano-fiber 23. Therefore, it is made possible to make the separator as thin as possible, and thereby to provide a more compact and light-weighted fuel cell.

In addition, the separator 4 is formed by pressing after filling the forming block with forming material. In another method, the forming material 20 filled with form similar to the final form as separator is pressed (preforming), furthermore, after filling the obtained preforming-compact with forming block of separator, it is possible to form as final separator form by pressing. Preforming can be performed as cold working (room temperature), and if preforming is performed as hot working, it is preferable to be set at temperature lower than 100°C.

### (example 1)

As example 1, after the granular composite (the first granular composite) 25 as shown in Fig.3 is obtained, the separator 4 for fuel cell with design shown in Fig. 1 is formed by pressing the forming material 20 which is aggregation of this granular composite 25.

Specifically, a carbon-nano-substance-coated graphite nuclear is obtained by coating, by dry blending, the carbon nano-fibers on the surfaces of squamous graphite nuclear of 100µm in average particle diameter. Subsequently, o-cresol (water solubility 2.0 in room temperature), phenol, formalin and potassium hydroxide are added in the reaction vessel with agitator, and said carbon-nano-substance-coated graphite nuclear is added in the vessel. Furthermore, while mixing them for 60 minutes to 90°C, and such state is kept for 4 hours. In the next place, after having been cooled off to 20°C, a hydrous granular matter is obtained by filtrating contents of the reaction vessel by Nutsche. Subsequently, the granular composite is obtained by drying this hydrous granule matter for about 48 hours in a hot air circulation type drying oven (temperature in the oven is 45°C). Compound ratios of the graphite nuclear, carbon nano-fiber and phenol resin, as shown in table 1, are graphite nuclear of 77 mass percent, phenol resin of 20 mass percent and carbon nano-fiber of 3 mass percent.

In addition, the forming material (the granular composite in a quantity depending on the separator shape) is filled with the forming block of separator, and the separator for fuel cell in relation to the present invention (hereinafter referred to as "the first example separator") is obtained by pressing on the conditions that the molding pressure is 20MPa, the forming temperature is 170°C , pressing time 3 minutes (main forming process).

Furthermore, first, second and third specimens with the same shape as the first example separator are obtained by pressing said granular composite as forming material on the same conditions as described above. In addition, the first specimen is a rectangular plate of 50mm in length, 80mm in width and 2mm in thickness. The second specimen is a square plate of 20mm in length, 20mm in width and 2mm in thickness, and the third specimen is a rectangular plate of 80mm in length, 10mm in width and 4mm in thickness.

### (example 2)

In example 2, except that compound ratios of the graphite nuclear, phenol resin and carbon nano-fiber, as shown in Table 1, are the graphite nuclear of 75 mass percent, phenol resin of 20 mass percent and carbon nano-fiber of 5 mass percent, a granular composite (first granular composite) of form shown in Fig.3 is obtained in the same way as example 1. Furthermore, when the granular composite obtained by means as described above is used as forming material, in the same way as example 1, a separator in the same form as the first example separator (hereinafter referred to as "the second example separator") and the first, second and third specimens in the same form as each specimen obtained in example 1 are produced.

### (example 3)

In example 3, except that the compound ratios of the graphite nuclear, phenol resin and carbon nano-fiber, as shown in Table 1, are the graphite nuclear of 70 mass percent, phenol resin of 20 mass percent and carbon nano-fiber of 10 mass percent, a granular composite (first granular composite) of form shown in Fig.3 is obtained in the same way as with example 1. Furthermore, when the granular composite obtained by means as described above is used as forming material, in the same way as example 1, a separator in the same form as the first example separator (hereinafter referred to as "the third example separator") and the first, second and third specimens in the same form as each specimen obtained in example 1 are produced.

### (example 4)

In example 4, except that the compound ratios of the graphite nuclear, phenol resin and carbon nano-fiber, as shown in Table 1, are the graphite nuclear of 60 mass percent, phenol resin of 20 mass percent and carbon nano-fiber of 20 mass percent, a granular composite (first granular composite) of form shown in Fig.3 is obtained in the same way as with example 1. Furthermore, when the granular composite obtained by means as described above is used as forming material, in the same way as example 1, a separator in the same form as the first example separator (hereinafter referred to as "the fourth example separator") and the first, second and third specimens in the same form as each specimen obtained in example 1 are produced.

### (example 5)

In example 5, except that the compound ratios of the graphite nuclear, phenol resin and carbon nano-fiber, as shown in Table 1, are the graphite nuclear of 50 mass percent, phenol resin of 20 mass percent and carbon nano-fiber of 30 mass percent, a granular composite (the first granular composite) of form shown in Fig.3 is obtained in the same way as with example 1. Furthermore, when the granular composite obtained by means as described above is used as forming material, in the same way as example 1, a separator in the same form as the first example separator (hereinafter referred to as "the fifth example separator") and the first, second and third specimens in the same form as each specimen obtained in example 1 are produced.

### (example 6)

In example 6, except that the compound ratios of the graphite nuclear, phenol resin and carbon nano-fiber, as shown in Table 1, are the graphite nuclear of 55 mass percent, phenol resin of 25 mass percent and carbon nano-fiber of 20 mass percent, a granular composite (the first granular composite) of form shown in Fig.3 is obtained in the same way as with example 1. Furthermore, when the granular composite obtained by means as described above is used as forming material, in the same way as example 1, a separator in the same form as the first example separator (hereinafter referred to as "the sixth example separator") and the first, second and third specimens in the same form as each specimen obtained in example 1 are produced.

### (example 7)

In example 7, except that the compound ratios of the graphite nuclear, phenol resin and carbon nano-fiber, as shown in Table 1, are the graphite nuclear of 45 mass percent, phenol resin of 25 mass percent and carbon nano-fiber of 30 mass percent, a granular composite (the first granular composite) of form shown in Fig.3 is obtained in the same way as with example 1. Furthermore, when the granular composite obtained by means as described above is used as forming material, in the same way as example 1, a separator in the same form as the first example separator (hereinafter referred to as "the seventh example separator") and the first, second and third specimens in the same form as each specimen obtained in example 1 are produced.

### (Comparative example 1)

As comparative example 1, after the powdered phenol resin have been crushed and mixed by ball mill, a slurry state is formed by adding the methanol to said resin. And the graphite nuclei used in the embodiment 1 are added to this. After being dried at 60°C with agitation, the resin-graphite mixture powder is obtained by crushing it in mixer. The compound ratio of phenol resin and graphite powder, as shown in Table 1, is the graphite powder of 80 mass percent and phenol resin of 20 mass percent: When the phenol resin is crushed and mixed, the magnesium stearate is added in the middle.

And the obtained resin-graphite mixture powder is used as forming material. As with the first embodiment, the separator of the same shape as the first embodiment separator (called "the first comparative example separator") and the first ~ third specimen of the same shape as the specimen obtained in the embodiment are produced. (Comparative Example 2)

As comparative example 2, the compound ratio of graphite powder and phenol resin, as shown in Table 1, is the graphite powder of 75 mass percent and phenol resin of 25 mass percent. And the obtained resin-graphite mixture powder is used as forming material. As with the first embodiment, the separator of the same shape as the first embodiment separator (called "the second comparative example separator") and the first~third specimens of the same shape as each specimen obtained in the embodiment 1 are produced.

In order to identify the properties each separator obtained as described above, the following characteristic tests were performed by using each specimen obtained in the embodiments 1~7 and comparative examples 1 and 2.

In other words, specific resistances (volume resistivities) measured in conformity with JISK7 by a four-probe method. In addition, for each of the second specimens, contact resistances are estimated by measuring voltages at 1 ampere under the condition that two second specimens are placed in the stack between measurement electrodes with sandwiching them at contact face pressure of 10kgf/cm2. Furthermore, the bending strength each third specimen is measured in conformity with JISK7174 by three point bending strength measuring method. These test results are shown in the following Table 1.

As shown clearly in Table 1, embodiment 1~7 in which the carbon nano-fibers are compound have the volume and contact resistivity smaller than the comparative example 1 and 2 in which the carbon nano-fibers are not compound, and in particular the contact resistivity decrease greatly. Therefore, in comparison with the first and second comparative example, the performance of fuel cell is largely improved by using the first~seventh embodiment separators, and it is understood that the compactization and light-weighting of fuel cell can be accomplished.

**Table 1**

| | | Forming Material | | | Separator | | |
|---|---|---|---|---|---|---|---|
| | | Graphite Nuclear (Mass %) | Phenol Resin (Mass %) | Carbon Nano-fiber (Mass %) | Volume Resistance (mΩ · cm) | Contact Resistance (mΩ · cm) | Bending Strength (MPa) |
| Example | 1 | 77 | 20 | 3 | 9 | 16 | 46 |
| | 2 | 75 | 20 | 5 | 7 | 12 | 48 |
| | 3 | 70 | 20 | 10 | 5 | 8 | 52 |
| | 4 | 60 | 20 | 20 | 4 | 5 | 56 |
| | 5 | 50 | 20 | 30 | 4 | 5 | 59 |
| | 6 | 55 | 25 | 20 | 6 | 7 | 58 |
| | 7 | 45 | 25 | 30 | 5 | 6 | 60 |
| Comparative Example | 1 | 80 | 20 | - | 11 | 20 | 40 |
| | 2 | 75 | 25 | - | 16 | 30 | 42 |

### INDUSTRIAL APPLICABILITY

According to the present invention, the separator for fuel cell of which the separator properties such as the electrical characteristics (conductivity) and mechanical strength etc. are greatly improved can be obtained, and the performance of fuel cell is greatly improved.

## Claims

1. A forming material of separator for fuel cell, **characterized in that** said forming material is comprised of an aggregation of granular composites, wherein each granular composite is a graphite nuclear coated by a coating layer consisting of hardening resin and carbon nano-substance.

2. The forming material of separator for fuel cell according to Claim 1, wherein said graphite nuclear has mean grain size of 50 ~ 150 µm, and contains solid carbon more than 98%.

3. The forming material of separator for fuel cell according to Claim 1, wherein said forming material contains said graphite nuclear of 55 ~91 mass percent, said hardening resin of 9 to 25 mass percent and carbon nano-substance of 3 to 30 mass percent.

4. The forming material of separator for fuel cell according to Claim 1, wherein said carbon nano-substance is carbon nano-fiber.

5. The forming material of separator for fuel cell according to Claim 1, wherein said hardening resin is phenol resin.

6. A separator for fuel cell, **characterized in that** said separator is formed by pressing said forming material according to any one of Claims 1 through 5, wherein a predetermined forming block is used in said pressing.

7. The separator for fuel cell according to Claim 6, wherein said separator is obtained by carrying out said pressing under conditions that heating temperature is 150 ~ 200 °C and molding pressure is 15 ~ 20 MPa.
